# EUROPEAN PATENT APPLICATION

(11) **EP 1 677 077 A2**
(43) Date of publication of application: **05.07.2006**
(21) Application number: 05026456.3
(22) Date of filing: 05.12.2005
(51) Int. Cl.: G01C 21/20

(54) **Consultation and processing system of information for hiking with the use of standard PDA hardware**

(30) Priority: 30.12.2004 IT TV20040159
(71) Applicant: GIOVE Srl, 31100 Treviso (IT)
(72) Inventor: Scardellato, Adriano, 31100 Treviso (IT)
(74) Representative: Massa, Patrizia

(57) **Abstract**

Information consultation and processing system for hiking with the use of standard hardware of the PDA type or equivalent, said system integrating or cooperating with the following instruments: compass, altimeter, coordinates (UTM 32 - WGS 84). It provides the following use mode:
- consultation (GPS off): cartographic consultation without GPS positioning with the possibility of selection and inquiry of the DB, creation of itineraries and calculation of the path
- free navigation: cartographic consultation with GPS positioning
- guided navigation: cartographic guide, written and vocal on a pre-set itinerary/path.

## Description

### Domain of the Invention

The object of this invention is a satellite navigation system with consultation and processing functions of information for hiking and the use of standard hardware of the PDA type or an equivalent and hardware specific to the outdoor world.

The invention finds particular application in the hiking sector as well as in road navigation.

PDA's are certainly well known. An acronym of Personal Digital Assistant, it introduces hand-held devices, electronic apparatuses by now commonly used, sometimes known as "palmtop" devices or portable organizers. This concerns apparatuses with rather contained dimensions made up of a container, generally made in plastic material, on the interior of which is found processor and a memory with integrated display, possibly an alphanumeric keypad, a seat for containing the supply part and/or possible telephonic functionality. The screens available can be in colour or tones on a grey scale.

### Prior Art

In CA2280677 (Gray et al.) an integrated information system is described for defining the path and the cartography that integrates a routing/mapping information system. Said information as described IRMIS is shown as cartographic applications on the desktop of one or more hand-held devices, personal digital assistant (PDA) or palmtop devices. Said devices can optionally be equipped with, or connected to a GPS (Global Positioning System) or equivalent detection device. The desktop application facilitates the selection by the user of areas, departures, stops, destinations, maps and/or points and/or information regarding the route. It is optionally provided with online information, preferably for the transfer to the PDA or equivalent devices. The options available to the user include information on the route, area and route maps. The maps and information regarding the relative route are configured with different details and size levels. Used in this domain, in conjunction with a GPS receiver, the PDA device is configured to represent directions, text and map formats of the current position of the user, direction, speed, elevation and so forth. Acoustic signals can identify the next tum along the planned route. The user can scan through maps and zoom between two or more map scales and size or detail levels. The IRMIS system is provided with automatic zoom, for example to show in detail when the user is close to reaching the destination, or with a larger scale and lower resolution to represent the route planned by the user between points of interest. The IRMIS system makes it possible to for the user to mark or record specific places, and/or the current log of the travelling routes by using the GPS information. These places noted as "marks" and/or "breadcrumb" or log data of the GPS can be saved, updated, represented or otherwise processed on the desktop by the geographic or cartographic information system of the user. The application system can be distributed online or through tangible means, in limited and advanced manipulation formats.

DE10134116 (Willenbrock) provides a road vehicle that uses a personal digital assistant (PDA) that is coupled to a GPS and is provided with a relative data file containing the cartography. The PDA interacts with the electronics of the vehicle.
The PDA can be removed by the relative support in the vehicle and placed in a base, at home or at work. The relative data can be read and transmitted to a computer to be processed.

EP0763808 (Obuchi), describes a processor that files a planned series of tours, in which a variety of means of transport are used, in a given terminal installed in a vehicle and a PDA such as a palmtop PC capable of supporting said planned series of tours. The console presents a seat for housing the PDA. The data processor of the PDA transmits to the terminal the listed tours that are extracted and referred to the vehicle. When the current position discloses the movement of the vehicle, a navigation unit guides the vehicle. At the end of the guide, the data processor installed in the vehicle activates the PDA that optimizes and releases information to the guide.

US6674445 (Chithambaram et al.) suggests a generalized coding differential, with raster indexed vector data and a scheme for maps on a PDA. A scheme provides a performance and compact file with both data and metadata for raster, vectors and information redlining. One single database is used. The vector object includes spatial indexed information, to allow spatial filtration of the objects that fall within a specific view. Therefore, the invention uses a generalized, encoded, and indexed cartography to provide compactly, an efficient spatial data file that communicates with the PDA that is constrained within limits defined by the file, capacity to process, memory and bandwidth.

US6694256 (Childs et al.) provides a PDA that includes a processor and a suitable memory to communicate with the processor. The memory presents cartographic data including a number of places and data indicating streets with heavy traffic of a plurality of types each connected to the sites and organized in hierarchical levels. The processor elaborates a route by means of algorithms that are dynamically forced.

Some companies, particularly in the sector, have understood the need to find more effective alternative solutions with respect to the solutions in existence up to now.

The aim of this invention is also to avoid certain drawbacks.

### Brief Description of the Invention

This and other aims are achieved with this invention according to the characteristics as in the included claims that resolve the disclosed problems by means of a satellite navigation system with a function for the consultation and processing of information, particularly for hiking with the use of standard hardware of the PDA type or an equivalent that integrates the following functions: compass, altimeter, coordinate translator (UTM 32 - WGS 84) distance meter, time speed and consumption. It provides the following mode of use:
- Consultation (with GPS off): cartography consultation without GPS positioning with the possibility of selection and inquiry of the DB, creation of itineraries and calculation of the path
- free navigation: cartography consultation with GPS positioning.
- guided navigation: cartographic guide, written and vocal on a pre-set itinerary/path.

### Viewing of Consultation or Navigation

- 2 D with representation by means of raster backgrounds of land morphology, depth contours, altitude profile of the stretch to be covered, main POI with name and altitude (e.g.: of refuges, summits etc)
- 3 D assignment of altitudes on the link and relative elevation **Path**

- Calculation of the path with ad hoc algorithms for excursional use. Introduction of the use of variables that select the path on the basis of excursional needs. (e.g.: difficulty of the paths, gradient, selection of paths according to the means etc)
- Proposal of the ideal route calculated on the basis of information supplied, such as the departure point, possible intermediate stages, arrival point, means (footpaths, paths for mountain bikes, tourist cycling, downhill skiing, cross-country skiing, Alpine skiing, bridleways and standard car)
- Moreover, the possibility is provided of loading paths predefined by excursion type /means, planned and supplied with the software.

### Search for Addresses / POI (point of interest)

Address: the search can be preset according to the following criteria
municipality - street - number, municipality - postcode - street - number, municipality - type of element in the proximity of the position signalled by GPS and setting of km range defined by the user, and by applying on cells with SMS with coordinate type (see communication section).

POI: the search can be preset according to the following criteria name of POI, municipality, category POI, in the proximity of the position signalled by GPS and setting of km with a range or area that is provincial, municipality - street, all the POI present one given street and mixture of this criteria.

The result of the search can be set as departure, destination, intermediate stage, favourite, or memorization point by means of vocal commands.

### Communication

In the hardware applications that exploit the connection by means of a cellular or satellite telephone (on external apparatus by means of Blue Tooth or integrated into the hardware) it is possible carry out a sending of SMS or date strings that report the positional coordinates of the user, in order to allow interaction between more instruments and towards a safety central or management fleet produced by the same inventor or not.

Sending signal (radio Low frequency/blue tooth/GPS/SMS) with the aim of locating first aid from systems nearby (anti-avalanche)
User Interface
graphic: colour LCD screens or on a scale of grey tones
Input: 'touch screen' and textual.
vocal: vocal commands (input and output)
Integrated on SW of third parties, for the management of the communication and the exchange of information by means of the Organizer.

### Acquisition of User's Personal Data

Memorisation of "Geo Notes" on coordinated base

POI may include:
audio/vocal file recorded outright or secondarily
image file
text file.

The functional modality consists in covering a point on the cartography, memorizing the coordinates and associating to it a multimedia file of any typology and format.

Registration function of the GPS (encrypted) track and use for assisted navigation by means of representation by visualization of the track on the map.

### Visible Information

The system can be set and the user chooses if and what he/she wishes to visualize. The system adapts the cartographic representation and usage according to the requested aim/visualization. Among the parameters: speed, altitude, gradient, road being travelled, design of the networks of 'roads' (in a broad sense. technical: ' link') visible, manoeuvre, Km to the next manoeuvre, Km to arrival, compass, n. satellites receiving, total list of manoeuvres to be made, speed and calculations of different types, types of roads/pathways /points of interest.

The object of this invention is configured in two applications:
- MYNAV ST, intended for road navigation.
- MYNAV Mountain, intended for hiking navigation;

The two applications are embodiments of the function of use, based on the same 'motor' (management library of information), they present common functions and specific functions for the use mode. The visualization interfaces will have the same graphic style but will be functionally different.

### Aims

A first aim consists in producing a product for localization and for satellite navigation specifically devised for hiking.

A second aim is to provide data banks created ad hoc that are electronic and navigable:
1. complete information (pathways, cycle paths and mountain-bike paths, ski slopes, lifts, bridleways.)
2. signalling of points of interest (POI) such as refuges, ski schools, mountain first aid, hospitals, APT etc. with indication of all the useful information relating to timetables, costs, telephone numbers etc.
3. typical symbols and classifications of topographic mountain maps and standard classification CAI
4. colour three-dimensional morphologic representation
5. altimetric representation with depth contours

A third aim is to allow the personalization of the information: geo-referencing being possible and registration of paths, photos, notes and call back at any moment.

A fourth aim originates from the specific calculation algorithms for the mean(s)/ choices for a certain path.

A fifth aim is that of producing a single product for road navigation and for hiking, for work and for free time, on palmtop hardware that is also a practical organizer.

A sixth aim consists in finding a greater simplicity and rapidity of use. In particular,

Maximum practicality in the palm of your hand thanks to the reduced dimensions and contained weight of the hardware.

Possibility of use on any palmtop or GPS antenna.

These and other advantages will appear from the following detailed description of certain preferred embodiments.

### Description of certain Embodiments of the Invention

The specifications of the two applications:

*First Application*

### Consultation Modality - Free/Guided navigation;

**Functional characteristics;**
- **Consultation:** cartographic consultation without GPS positioning with the possibility of selection and inquiry of the DB, creation of itineraries and calculation of the path;
- **Free Navigation:** cartographic consultation witzh GPS positioning with the possibility of selection and inquiry of the DB.
- **Guided Navigation:** cartographic guide, written and vocal on an itinerary/pre-established path or selected by means of variables set by the user.
- **Visualization:**
   Of consultation or Navigation:
   □ 2 D;
   □ Perspective view (said bird's-eye view)
- **Instruments:**
   o Electronic reproduction of instruments such as; altimeter, orientative and directional compass, speedometer.

**ITINERARY**
□ Preloaded and described paths:
   o Creation of paths ad hoc complete with description and guide, reproduction of known paths, suitable for specific means. (bicycle, ski, mountain climbing, horse-riding)

**PATH**
□ Calculation of the path:
   ■ From address to Address;
   ■ From address to Poi/Geo Note;
   ■ From Poi to Poi/Geo Note;
   ■ From GPS position to address;
   ■ From GPS position to Poi/Geo Note;
   ■ From GPS position to Preferred destination;
   ■ With click on menu
   ■ With vocal recall
   ■ From GPS position to recent Destination;
   ■ Automatic recalculation;
   ■ Calculation n alternatives on request of the user;
   ■ Calculation options:
      o Avoid road (one or more);
      o Avoid area (one or more);
      o Position a block to 100 - 200 -300 -500 -1000 mt.
      o Speed with Car;
      o Short with Car;
      o Addition/Elimination intermediate stages;
      o Avoid roads with toll;
      o Avoid motorways
      o Avoid city centres;
      o Consider ferries;
      o Consider railways;
      o Choice of means:
      o On Foot (with or without lifts)/Bicycle/Horse/Truck/Difficult or easy hikes/Skiing/Skiing with lifts, Cross-country skiing/Alpine skiing, automobile with or without motorways and various pre-selected networks.
□ *Save the paths as favourite paths;*
□ *Loading the favourite paths;*
□ *Last instruction recall;*
□ *Recall the sequence of written instructions:*
   ■ Manoeuvre icon, description, km to the manoeuvre;
   ■ Total km (progression of the manoeuvres);
   ■ Estimated time for arrival;
   ■ Height difference;
   ■ Maximum gradient;
   ■ Average consumption
□ *Path summary;*
□ *Route Guide (messaging to the user);*
   ■ language choice for visible texts
   ■ language choice for warnings, guide, signs, and description of POI,
   ■ synthesizing and consolidation function of the manoeuvres in relation to the parameters and to the type of means chosen for the path

**SEARCHES**
□ *Search Addresses*/*Poi*/*Paths*/*tracks-Installations*;
   ■ Address:
      o Municipality - Postcode - Road - Number;
      o In the proximity of the position signalled by GPS and setting no. km in a range defined by the user;
      o Outlook Contact;
      o SMS type (see communication section);
         The result of the search can be set as Departure, Destination, Intermediate Stage, favourite, stored and/or connected to a vocal control.
   ■ Poi:
      o Name Poi
      o Name Poi - Municipality;
      o Category - Municipality;
      o In the proximity of the position signalled by GPS and setting of no.. km in range/provincial area;
      o In the proximity of the destination selected;
      o Municipality - Road; (all the POI present on a road);
         The result of the research must be set as Departure, Destination, Intermediate stage, Favourite, vocal command memorization.

**COMMUNICATION**
□ *Communication:*
   ■ *Sending of SMS with address and coordinates of the position*
   ■ *Sending of messages on a radio signal (Blue Tooth; low and medium freguency, with positional coordinates*
   ■*Connection to management or information central, (Weather, Traffic Connection (TMC) Emergency Central (Emergency numbers).*
   ■ Forced receipt of information sent by connected centrals
□ *User interface:*
   ■ *Vocal. Vocal commands (input path calculation....);*
   ■ *Sending signal (radio*/*gps*/*sms) for location for first aid;*
   ■ *Integration SW third parties*
   ■ *Connection with the Outlook index;*
   ■ *Connection with arrived sms (only HW cellular)*
   ■ **Options/Settings;**
□ Display:
   ■ day modality;
   ■ nocturnal modality;

   □ *Vocal instructions:*
      ■ language change for the vocal commands;
      ■ male/female;
      ■ loudspeaker volume;
      ■ setting of vocal warnings:
      ■ Low gps signal (yes/no);
      ■ absence of gps signal (yes/no);
      ■ POI arrival warning (yes/no);
      ■ reproduction GEO Notes (yes/no);
□ *View:*
   ■ 2D
   ■ Perspective view (said bird's-eye view)
   ■ Automatic zoom (yes/no);
□ *Map:*
   ■ Source memory (e.g.: Compact Flash - Secure Digital);
   ■ Maps loaded in memory;
   ■ Visualized map;
      I choose that map that I wish to see, the choice is exclusive.
□ *Poi to be visualized on the map:*
   ■ select for category;
   ■ select all;
   ■ de-select all;
   ■ *Product information:*
   ■ *Functions set on hardware keys to manage navigation on map*;
   ■ Key on;
   ■ Key down;
   ■ Key dx;
   ■ Key sx;
□ *Visual navigator;*
   ■ Information and controls and Automatic settings present on the display in navigator modality (2d);

**Setting on visualization information:**
■ Speed;
■ Altitude;
**■** Gradient;
■ Road that is being travelled;
■ Next manoeuvre with road name;
■ Km to the next manoeuvre;
■ Km to arrival;
■ Time to arrival;
■ Compass;
■ No. Satellites receiving;
■ Total list of manoeuvres to be made;

**Commands:**
■ Last vocal indication;
■ Zoom +/-;
■ Pan;

**Settings:**
■ 2D view/perspective view (said bird's-eye view);
■ Automatic 2D zoom;
■ Automatic zoom Perspective view (said bird's-eye view);
   □ *navigator menu;*
■ choice of icons/commands to be displayed in the menu

**Acquisition data;**
□ *Memorization of GEO NOTES in form of POI (point coordinates) on the favourites or another personal index; To the new POI associate:*
   ■ Audio/vocal file recorded outright or later;
   ■ Image file;
   ■ Video file;
   ■ Text file;
□ *Registration of GPS tracks and saving on file *.log or .gps o.txt (encrypted);*
□ *Load file log for visualization of the tracks on the map (function return home);*

### Tapping Functionality (pressure with the stylus on the display) of the entity of the map;

**Short Tapping for 2D and Perspective view (said bird's-eye view) and each representation of the Map.**
□ *Visualize present data elements:*
   ■ Link road: name and numbers;
   ■ Other Link: (railway, river, etc.): type, name;
   ■ POI: name, altitude, road, municipality, telephone;
   ■ Polygons: name, type (lake)

**Prolonged tapping**

| **Functions** | **Cartographic Entity** | | | |
|---|---|---|---|---|
| Navigate towards; | *Link* | *POI* | *Polygon* | *Map point* |
| Departure point; | **X** | **X** | - | **X** |
| Insert intermediate stage; | **X** | **X** | - | **X** |
| Preferred Destination; | **X** | **X** | - | **X** |
| Search Neighbouring Poi; | **X** | **X** | **X** | **X** |
| Search Neighbouring Roads; | **X** | **X** | **X** | **X** |
| Avoid Link; | **X** | - | - | - |
| Call telephone number; | - | **X** | - | - |
| Memorize GEO NOTE; | **X** | - | **X** | **X** |

*Second Application* called MYNAV Mountain
**Consultation Modality - Free/Guided Navigation;**

**Functional characteristics;**
- **Consultation:** cartographic consultation without GPS positioning with the possibility of selection and inquiry of the DB, creation of itineraries and path calculation;
- **Free navigation:** cartographic consultation with GPS positioning.
- **Guided navigation:** cartographic guide, written and vocal on a pre-set itinerary/path.
- **Visualization:**
   Of consultation or Navigation:
   □ *2D*;
      ■ *Raster backgrounds (moroholagy of the land);*
      ■ *Depth contours;*
      ■ *Altimetric profile of the path that is being travelled;*
      ■ *Main POI, name and altitude of refuges and summits;*
   □ 3D;
      ■ *assignment of altitudes on the Links and relative elevation (to be evaluated);*
      ■ **Instruments:**
   □ Typical functions and instruments: (visualize localizer)
      ■ Compass;
      ■ Altimeter;
      ■ Coordinates (wgs - utm)

**ITINERARY**
□ *Decide the paths to be travelled and select them manually* the need originates from the fact that a hiker often not does calculate the path to and from but decides where he/she wants to pass to arrive at a certain destination.
   The principle is: follow this first path regardless of possible shortcuts or alternatives, until crossing the second path that I have asked you and so forth.

**PATH**
□ *Calculation of the path :*
   ■ From Poi to Poi/Geo Note;
   ■ From GPS position to the path name;
   ■ From GPS position to Poi/Geo Note;
   ■ From GPS position to Favourite destination;
   ■ With click from menu
   ■ With vocal recall
   ■ From GPS position to Recent destination;
   ■ Automatic recalculation (only on request)
   ■ Calculation options:
      o Avoid Link (e.g. paths for difficulty);
      o Fast;
      o Short;
      o Addition/Elimination of intermediate stages;
         With the possibility of changing the run order and always adding/eliminating with consequent recalculation
      o Choice of means: On foot/bicycle (it must/must not take into account one-ways, etc.);
         Advanced settings... before starting the calculation I always see choice/choices only on request.

   ■ Calculation no. alternatives on request of the user; (ski runs) if the user is not happy with the calculated path there must be the possibility of calculating more alternatives without re-setting any parameters.
□ *Save the paths as preferred paths;*
□ *Load the preferred paths:*
□ *Recall the sequence of written instructions:*
   ■ Icon manoeuvre, description, km. remaining to the manoeuvre;
   ■ Total km (progression of the manoeuvres);
   ■ Height difference;
□ *Summary of the path (short written report);*
   it must also report the criteria with which the path has been calculated (E.g.. without motorways, avoiding city centres, etc..)
□ *Route Guide (messaging to the user);*
□ *Language choice for visible texts*
□ *Language choice for warnings, guide, signs, and POI description,*
□ *Synthesizing and consolidation functions of the manoeuvres in relation to the*

**SEARCHES**
□ *Research Addresses*/*POI*/*Pathways*/*Runs-Installations:*
   ■ Address:
      o Name
      o Municipality - Postcode - Road - Number;
      o Municipality - element type;
      o In the proximity of the position signalled by the GPS and setting no. Km in a range defined by the user;
      o SMS type (see communication section);
      o Poi:
      o Name Poi - Municipality;
      o or Category - Municipality;
      o In proximity of the position signalled by GPS and setting n. km in range/provincial area;
      o Municipality - Road; (all the POI present on a road);
         The result of the search must be set as Departure, Destination, Intermediate Stage, Favourite vocal command memorization.

**COMMUNICATION**
□ *Communication:*
   ■ *Sending SMS with address and position coordinates*
   ■ *Sending messages on radio signal (Blue Tooth; low and medium frequency, with positional coordinates*
   ■ *Connection to management or information centrals. (Weather, Traffic Connection (TMC) Emergency Central (Emergency Numbers).*
   ■ *Forced receipt of information sent by connected centrals*
□ *Integration SW third parties*
   ■ *Connection with Outlook index;*
   ■ *Connection with SMS*
   **■ Options/Setting;**
□ *Display:*
   ■ day modality;
   ■ nocturnal modality;
□ *Vocal instructions:*
   ■ language change for vocal commands;
   ■ male/female;
   ■ loudspeaker volume;
   ■ vocal warning setting:
   ■ Low GPS signal (yes/no);
   ■ absence of GPS signal (yes/no);
   ■ POI arrival warning (yes/no);
   ■ reproduction GEO Notes (Yes/No);
□ *road*/*auto parameter setting*
   ■ Speed limits for:
      ■ Motorway;
      ■ Expressway;
      ■ Arterial Highway;
      ■ Secondary Road;
      ■ Connecting Road;
      ■ Important state road;
      ■ State road;
      ■ Municipal road;
      ■ *Auto Parameters for*:
      ■ Auto Use:
      ■ Average speed;
□ *View:*
□ 2D
o Perspective view (said bird's-eye view)
o Map:
   ■ Source memory (e.g.: Compact Flash - Secure Digital);
   ■ Maps loaded in the memory;
      I see the list of maps loaded in the memory and see where they are memorized.
   ■ Visualized map;
      I select the map that I want to see, the choice is exclusive.
o poi to be visualized on the cartography:
   ■ select those you wish to see;
   ■ select all;
   ■ de-select all;
□ *Product information and DB release;*
□ *Functions set on hardware keys*;
   ■ Key up;
   ■ Key down;
   ■ Right dx;
   ■ Key sx;
□ *Visual Navigator;*
□ Information and commands and Automatic settings present on the display in navigator modality;

**Information:**
■ Speed;
■ Altitude;
■ Gradient;
■ Road that is being travelled;
■ Next manoeuvre with road name;
■ Km to the next manoeuvre;
■ Km to arrival;
■ Compass;
■ No. Satellites receiving;
■ total list of manoeuvres to be made;

**Commands:**
■ Last vocal indication;
■ Zoom +/-;
■ Pan;

**Settings:**
■ View 2D/Perspective view (said bird's-eye view);
   □ *navigator menu;*
■ choice of icons/commands to be visualized in the menu

**Data Acquisition;**
□ *Memorisation of GEO NOTES in the form of POI (point coordinates) on favourites or another personal index; to the new POI I may include:*
   ■ Audio/Vocal File recorded outright or after;
   ■ Image file;
   ■ Text file;
□ *Registration of GPS track and save on file *.log or .gps o.txt (encrypted);*
□ *Load file log for visualization of the track on the map;*
   **Tapping Functionality (pressure with the stylus on the display) of the entity of the map;**

**Short Tapping (both for 2D and Perspective view (said bird's-eye view)**
□ *Visualize tapped entity data*
   ■ Link road: name and municipality;
   ■ Other Link: (rail, river, etc.): type, name;
   ■ POI: name, road, number, telephone, external connections (description, photo, GEO Note);
   ■ Polygons: name, type (lake)

**Prolonged Tapping (only on 2D)**

| **Functions** | **Cartographic Entities** | | | |
|---|---|---|---|---|
| Navigate towards; | *Link* | *POI* | *Polygon* | *Map point* |
| Departure point; | **X** | **X** | **-** | **X** |
| Insert intermediate stage; | **X** | **X** | **-** | **X** |
| Preferred destination; | **X** | **X** | **-** | **X** |
| Search for neighbouring POI; | **X** | **X** | **X** | **X** |
| Search for neighbouring road; | **X** | **X** | **X** | **X** |
| Avoid road; | **X** | **-** | **-** | **-** |
| Avoid Area; | **X** | **-** | **-** | **-** |
| Call the telephone no.; | **-** | **X** | **-** | **-** |
| Memorize GEO NOTE; | **X** | **-** | **X** | **X** |

## Claims

1. Information consultation and processing system for hiking with the use of standard hardware of the PDA type or equivalent, **characterized in that** it consists of a single product for road navigation and for hiking, for work and for free time, on palmtop hardware that is furthermore a practical organizer that provides the use of electronic data banks created ad hoc, having:
a) complete information (pathways, cycle paths and mountain-bike paths, ski runs, bridleways, lifts etc.)
b) signalling of points of interest (POI) such as refuges, ski schools, mountain first aid, hospitals, APT etc. with the indication of relative time-tables, costs, telephone numbers etc.
c) standard symbols CAI
d) colour three-dimensional morphologic representation
e) altimetric representation with depth contours
f) Information Personalization: it is possible to geo-reference and record paths, photos, notes and recall them at any moment.
g) Specific calculation algorithms for the mean(s)/choices for a certain path and the use that is to made of them.
h) complete information (pathways, cycle paths and mountain-bike paths, ski runs, bridleways, lifts etc.)

2. Information consultation and processing system for hiking with the use of standard hardware of the PDA type or equivalent, according to claim 1 **characterized in that** said system integrates the following functions: compass, altimeter, coordinate translator (Utm 32 - Wgs 84) distance meter, time speed and consumption. It provides the following use mode:
- Consultation ( GPS off): cartographic consultation without GPS positioning with the possibility of selection and inquiry of the DB, creation of itineraries and calculation of the path
- free navigation: cartographic consultation with GPS positioning.
- guided navigation: cartographic guide, written and vocal on a pre-set itinerary/path.
**Viewing of consultation or navigation**
- 2D with representation by means of raster backgrounds of the morphology of the terrain, depth contours, altimetric profile of the track to be travelled, main POI with name and altitude (e.g.: of refuges, summits etc)
- 3D assignment of altitudes to the Link and related elevation
**Path**
- Calculation of the path with ad hoc algorithms for excursional use. Introduction of the use of variables that select the path on the basis of excursional needs. (e.g.: difficulty of the paths, gradient, choice of paths according to the means etc)
- Proposal of the ideal path calculated on the basis of information supplied, such as the departure point, possible intermediate stages, point of arrival, means (paths, mountain-bike paths, cycling paths, downhill skiing, cross-country skiing, alpine skiing, bridleways and standard car)
- The possibility of loading predefined paths according to the typology of planned excursion/means and supplied with the software is also provided.
**Searches for Addresses / POI (points of interest)**
Address: the search can be preset according to the following criteria municipality - road - number, municipality - postcode - road - number, municipality - type of element
in the proximity of the position signalled by GPS and setting of km range defined by the user, and by applying on cells with SMS with coordinate type (see communication section).
POI: the search can be preset according to the following criteria name POI, municipality, category POI, in the proximity of the position signalled by GPS and setting of km range or provincial area, municipality
- road, all the POI present one given road, and a mixture of this criteria. The result of the search can be set as departure, destination, intermediate stage, favourite, or memorisation point by means of vocal commands.
**Communication**
In the hardware applications that exploit the connection by means of cellular or satellite telephone, (on external apparatus by means of Blue tooth or integrated into the hardware) it is possible carry out the sending of an SMS or date strings that report the positional coordinates of the user, in order to allow the interaction between more instruments and towards a central. It may be produced by the same inventor or not. (of the type: Traffic Connection (TMC) or Emergency or Fleet Management)
User interface
graphic: lcd screens in colour or on a grey scale
Input: ' touch screen' and textual.
vocal: vocal commands (input and output)
signal sending ( Low frequency radio/Blue Tooth/GPS/SMS) for localization for first aid by local systems (anti-avalanche)
Integrated on SW of third parties, for the management of the communication and information exchange by means of an Organizer.
**Acquisition of User's Personal Data**
Memorization of "Geo Notes" on coordinated base
To the POI I may include:
Audio/vocal file recorded outright or secondarily
image file
text file.
The functional modality consists in tapping on a point of the cartography, memorizing the coordinates and associating it to a multimedia file of any typology or format.
Recording function of the track of the GPS (encrypted) and use for assisted navigation by means of representation for visualization of the track on the map.
**Visible information**
The system can be set and the user chooses if and what to visualize. The system adapts the cartographic representation and the use according to the aim/visualization request. Among the parameters: speed, altitude, gradient, road that is being travelled, design of the networks of 'roads' (in a broad sense. technical: 'link') visible, manoeuvre, Km to next manoeuvre, Km to arrival, compass, no. satellites receiving, total list of manoeuvres to be made, speed and calculations of various types, types of roads/paths/points of interest.
The object of this invention is configured in two applications:
• MYNAV ST, for road navigation.
• MYNAV Mountain, for hiking navigation;
The two applications are embodiments of the function of use, based on the same 'motor' (management library of information), they present common functions and specific functions for use mode. Visualization interfaces will have the same graphic style but will be functionally different.
